# EUROPEAN PATENT APPLICATION

(11) **EP 4 761 026 A1**
(43) Date of publication of application: **17.06.2026**
(21) Application number: 24307124.8
(22) Date of filing: 16.12.2024
(51) Int. Cl.: H02G 3/32, H02G 15/007, H01R 13/58

(54) **DOUBLE-LOOP STRAIN RELIEF AND SHIELD CLAMP**

(71) Applicant: SCHNEIDER ELECTRIC INDUSTRIES SAS, 92500 Rueil-Malmaison (FR)
(72) Inventor: SCHREMPP, Volker, 77933 Lahr (DE)
(74) Representative: Manitz Finsterwald Patent- und Rechtsanwaltspartnerschaft mbB

(57) **Abstract**

A double-loop strain relief and shield clamp for securing and shielding a cable to an electric device including a metal carrier, a strip, in particular a metal strip and a rewinder. The strip is configured to form a first loop and a second loop. The rewinder is configured to wind the strip to shield the cable with the first loop of the strip and secure the cable to the metal carrier with the second loop of the strip, wherein the first loop of the strip encompasses the cable and the second loop of the strip encompasses the cable and a securing part of the metal carrier.

## Description

### FIELD

The present disclosure relates to a double-loop strain relief and shield clamp, a method for securing a cable to an electric device, and an electric device.

### BACKGROUND

Cables to electric devices often end in plugs, connectors or cable glands. Several forces, for example tensile forces, compressive forces, torsional forces or bending forces may act on the cables which can cause the cables to detach from the plugs or even break. A strain relief clamp may protect a connection between a cable and an end piece against mechanical stress and secure the cable to an electric device.

On the other hand, shielding of a cable may also be important, for example in industrial environments such as automation technology, process automation and mechanical engineering or in automotive applications. The shielding may, for example, protect the cable from electromagnetic interference and thus optimize data transmission in data cables. At the same time, the shielding may prevent electromagnetic interference from emanating from the cable and interfering with other cables or electronic components.

Accordingly, there is a need to provide a strain relief and shield clamp that is configured to shield a cable and secure the cable at the same time.

This demand is satisfied by a double-loop strain relief and shield clamp and a method for securing and shielding a cable using a double-loop strain relief and shield clamp as described herein.

### SUMMARY

The present disclosure provides a double-loop strain relief and shield clamp for securing and shielding a cable to an electric device, a method for securing and/or shielding a cable to an electric device using the double-loop strain relief and shield clamp, and an electric device according to the independent claims. Embodiments can be taken from the dependent claims, the description and the drawings.

In one aspect, the present disclosure is directed at a double-loop strain relief and shield clamp for securing and shielding a cable to an electric device. The double-loop strain relief and shield clamp comprises a carrier, for example a metal carrier, a strip, in particular a metal strip, and a rewinder. The strip is configured to form a first loop and a second loop. The rewinder is configured to wind the strip to shield the cable with the first loop of the strip and secure the cable to the carrier with the second loop of the strip, wherein the first loop of the strip encompasses the cable and the second loop of the strip encompasses the cable and a securing part of the metal carrier.

The carrier may be configured to attach the double-loop strain relief and shield clamp to the electric device. The carrier, particularly in the form as metal carrier, may further be configured to shield the cable by conducting electromagnetic interference from the electric device via the metal carrier to the metal strip of the double-loop strain relief and shield clamp and to a shielding braid of the cable, or vice versa. An electrical connection may be established between the shielding braid of the cable and the metal carrier of the double-loop strain relief and shield clamp (e.g. via the strip) in order to conduct the electromagnetic interference.

It is to be understood that a mentioning of a "metal strip" or "metal carrier" or "metal strain relief and shield clamp", hereinafter shall also refer to only a "strip" or a "carrier" or a "strain relief and shield clamp", respectively, independent of the material of the strip or carrier or clamp. The disclosure herein is not only applicable to a "metal strain relief and shield clamp" but also to a "(metal) strain relief clamp".

The strip may be a flat, one-piece metal band, preferably without gaps or slits. On the one hand, the strip may be extremely flexible and therefore very thin. On the other hand, however, the strip may be strong enough to withstand high forces that act on the strip when the cable is secured and shielded by the strip. The strip and all other metal parts, for example the metal carrier, described herein, may be made of an electrically conductive material. However, the strip may alternatively be made of a non-electrically conductive material, for example plastic.

The first loop of the metal strip may describe a part of the strip that starts at a first end of the strip that may be attached to the metal carrier. The second loop of the metal strip may describe another part of the strip that starts at an end of the first loop in a region at the first end of the strip. Thus, the first loop may merge in the second loop in the region at the first end of the strip. The second loop may end at a second end of the strip that may be attached to the rewinder.

The first loop of the metal strip may form a cylindrical encapsulation for the cable, preferably without any remaining empty gaps. This may prevent a "soft" cable material of an insulation of the cable from "flowing" under pressure and over time, and the shielding braid of the cable may perfectly be connected with continuous pressure. The shielding braid may not be stressed in any way and conductive adhesive tapes may not be required for shielding the cable using the double-loop metal strain relief and shield clamp as described herein. Furthermore, high compression forces may be achieved using the rewinder to tighten the first loop around the shielding braid of the cable, and the shielding is enclosed almost "gas-tight" and thus protected against corrosion.

The second loop of the metal strip may provide a necessary strain relief by pressing the cable onto a conductive shield plate of the double-loop metal strain relief and shield clamp (as will be described in more detail further below), while the first loop of the metal strip may prevent the cable from being pressed flat at the same time.

The rewinder may be cylindrically formed and, like the metal carrier and the metal strip, made of an electrically conductive material. However, the rewinder may also have a different shape that is suitable for winding the metal strip. Furthermore, it is understood that the rewinder may be made of a non-electrically conductive material, for example plastic.

The rewinder may further be configured to attach and release the cable from the metal carrier. The cable may be attached to the metal carrier by winding the metal strip onto the rewinder. The cable may be released or detached from the metal carrier by unwinding the metal strip from the rewinder. When the metal strip is wound up to the rewinder, i.e. the double-loop metal strain relief and shield clamp is in an assembled state, the cable is secured to the metal carrier by means of the second loop of the metal strip and the cable is shielded against electromagnetic interference at the same time by means of the first loop of the metal strip. Thus, the double-loop metal strain relief and shield clamp combines the two effects of strain relief and cable shielding.

According to an embodiment, a first end of the metal strip is attached to the metal carrier and a second end of the metal strip is attached to the rewinder. The first end of the metal strip may be attached to the metal carrier by any suitable means, for example by welding, soldering, riveting, plugging or screwing. The attachment of the first end of the metal strip to the metal carrier may be permanent or temporary. The second end of the metal strip may also be attached to the rewinder by any suitable means, for example by welding, soldering, plugging or screwing. The attachment of the second end of the metal strip to the rewinder may be permanently or temporary. Thus, the metal strip may be interchangeable.

According to an embodiment, the rewinder is removably arranged in the metal carrier. The rewinder may be mounted on the metal carrier instead of being attached to the metal carrier. The metal carrier therefore may include at least one support configured for mounting the rewinder on the metal carrier. A removable rewinder may allow a more convenient usage of the double-loop metal strain relief and shield clamp. For example, the metal strip attached to the rewinder may first be wound around the cable building the first loop and wound around the cable and the securing part of the metal carrier building the second loop before the rewinder may be placed in the at least one support of the metal carrier for winding and tightening the metal strip. The rewinder may be rotated in a winding direction to tighten the metal strip, for example, rotating the rewinder to the right using a hexagon socket screw key in an opening of the rewinder. It is understood that the rewinder may not be removably arranged in the metal carrier, so that the cable has to be passed through pre-formed first and second loops of the metal strip.

Removing the cable from the double-loop metal strain relief and shield clamp may also be more convenient using a removable rewinder. The rewinder may only need to be rotated a little in an unwinding direction, for example, a little bit to the left using a hexagon socket screw key in an opening of the rewinder. This movement may just be enough to take the tension out of the metal strip so that the rewinder may lie loosely in the at least one support of the metal carrier and can then be removed. It is understood that the winding direction and the unwinding direction of the rewinder may be vice a versa.

Thus, the rewinder may be detached from the metal carrier before the metal strip is unwound completely to remove the cable. The double-loop metal strain relief and shield clamp may therefore be useable several times. Another advantage of the removable arranged rewinder may be that a plug or a device connector to which the cable can be connected does not need to be disconnected or removed from the electric device for servicing or when the cable has to be removed from the double loop metal strain relief and shield clamp. All parts of the double-loop metal strain relief and shield clamp may be reused when replacing the cable.

According to an embodiment, the first loop is configured to substantially encompass the cable at an angle of 360 degrees. Other angles that mostly encompass the cable are also possible, e.g. more than 330 degrees, more than 300 degrees or more than 270 degrees. In particular, the first loop of the metal strip may be configured to contact a shielding braid of the cable over the entire perimeter of the cable. This may improve the shielding of the cable against electromagnetic interference. Furthermore, the first loop may hold the cable in its round shape without squeezing the cable or electrical conductors inside the cable.

According to an embodiment, the first loop of the strip is arranged completely in the second loop of the strip. The second loop therefore surrounds the first loop, in particular in an assembled state of the double-loop metal strain relief and shield clamp. The first loop and the second loop may be configured in that the first loop tightens before the second loop when the strip is wound up with the rewinder.

According to an embodiment, the second loop extends along at least two surfaces of the securing part. The second loop may extend along a vertically arranged surface of the securing part and the second loop may extend along a horizontally arranged surface of the securing part. The vertically arranged surface of the securing part may be connected to the horizontally arranged surface of the securing part by a curved surface defined by a radius and arranged between the vertically arranged surface and the horizontally arranged surface of the securing part. Therefore, the second loop may extend along the vertically arranged surface, the curved surface and the horizontally arranged surface of the securing part.

According to an embodiment, the strip extends from the first end of the strip around a shielding braid of the cable, around the securing part of the metal carrier and back around the shielding braid of the cable to the rewinder at the second end of the strip. A course of the metal strip may begin in a first radial direction around the cable, in particular around the shielding braid of the cable, and may continue in a first vertical direction or a first inclined direction after the metal strip has enclosed the cable. The metal strip may extend in the first vertical direction or the first inclined direction till a first deflection of the metal strip at the securing part of the metal carrier.

The course of the metal strip may be deflected from the first vertical direction or the first inclined direction into a horizontal direction at a first curved surface of the securing part. The metal strip may extend in the horizontal direction till a second deflection of the metal strip at the securing part of the metal carrier. The course of the metal strip may be deflected from the horizontal direction into a second vertical direction or a second inclined direction at a second curved surface of the securing part.

The metal strip may extend in the second vertical direction or the second inclined direction till a second radial direction around at least one part of the cable, in particular around at least one part of the shielding braid of the cable. The course of the metal strip may continue in a third vertical direction or a third inclined direction after the metal strip has enclosed the at least one part of the cable. The metal strip may extend in the third vertical direction or the third inclined direction till the metal strip ends at the rewinder.

According to an embodiment, the metal carrier comprises a conductive shield plate and the rewinder is configured to press the cable to a radius of the conductive shield plate of the metal carrier using the second loop of the metal strip. The conductive shield plate may be curved.

The radius of the conductive shield plate may describe the curvature of the conductive shield plate. The radius or the curvature of the conductive shield may be designed depending on a diameter of the cable to be attached to the double-loop metal strain relief and shield clamp. The radius, and therefore the conductive shield plate, may preferably be designed so that cables with a diameter of up to 30 mm may be attached to the double-loop metal strain relief and shield clamp. For such a case, the radius of the conductive shield plate may also be 30 mm, or more. Of course, also cables having a smaller diameter may also pressed securely to the conductive shield plate using the second loop of the metal strip. It is understood that the radius or the curvature of the conductive shield plate may be designed in such a way that cables with a larger diameter than 30 mm may also be attached to the conductive shield plate and thus to the double-loop metal strain relief and shield clamp. Thus, no variants or less variants of the double-loop metal strain relief and shield clamp are needed to cover a large variety of cables.

The radius of the conductive shield plate may also prevent the metal strip from twisting as the metal strip, in particular the first loop of the metal strip, may be guided flat against the conductive shield plate when the metal strip is wound up by the rewinder.

According to an embodiment, the metal strip has a thickness of between 0,05 mm and 0,3 mm, preferable between 0,1 mm and 0,2 mm, in particular 0,15 mm. Therefore, the metal strip may be flexible.

According to an embodiment, the metal strip has a width of between 5 mm and 25 mm, preferable between 15 mm and 20 mm, in particular 18 mm. Therefore, the cable may be securely attachable to the double-loop metal strain relief and shield clamp.

According to an embodiment, the metal carrier comprises at least one support, in particular two supports configured to receive the rewinder, wherein the at least one support is formed as a half-shell. The at least one support may be arranged vertically above the conductive shield plate of the metal carrier. The at least one support may be configured to receive the rewinder in that the metal strip is arranged between two parts of the support or between two supports. The at least one support formed as a half-shall may enable an easy handling of the double-loop metal strain relief and shield clamp in that the metal strip that is attached to the rewinder may be wound around the cable and the securing part of the metal carrier and placed in the half-shell of the at least one support.

The at least one support may further be configured to press the double-loop metal strain relief and shield clamp to the electric device, in particular to a fixture of the electric device. The rewinder arranged in the at least one support may generate a force against the at least one support in the assembled state of the double-loop metal strain relief and shield clamp. The force may press the metal carrier against the fixture of the electric device.

According to an embodiment, the securing part of the metal carrier comprises at least one radius, in particular a plurality of radii configured to deflect a course of the strip. Each radius of the plurality of radii may define a curvature of a curved surface of the securing part. The second loop of the strip may extend along the curved surfaces of the securing part. Therefore, a course of the metal strip may be deflected at least two times when the metal strip, in particular the second loop of the metal strip enclosed the securing part of the metal carrier. The at least one radius or the plurality of radii at the metal carrier may be configured to form the second loop of the metal strip.

According to an embodiment, the double-loop metal strain relief and shield clamp further comprises a locking part configured to secure the rewinder in an assembled state of the double-loop metal strain relief and shield clamp. The locking part may be configured to prevent the metal strip from unwinding from the rewinder in the assembled state of the double-loop metal strain relief and shield clamp. Therefore, the rewinder may be locked by the locking part in a direction that corresponds to the unwinding of the metal strip from the rewinder. The locking part may be made of metal, for example spring steel, or plastic.

According to an embodiment, the rewinder comprises a plurality of protrusions arranged on an outer surface of the rewinder. The rewinder may be configured to work like a ratchet. Each protrusion of the plurality of protrusions may be formed as a ramp, wherein the ramp of each protrusion of the plurality of protrusions may be directed in the same direction, in particular in a same direction of rotation of the rewinder. The plurality of protrusions may be evenly distributed at one end on a circumferential surface of the rewinder, thus, there may be equal distances between two protrusions of the plurality of protrusions. At least one protrusion of the plurality of protrusions is engaged with the locking part in an assembled state of the double-loop metal strain relief and shield clamp.

According to an embodiment, the locking part comprises a nose at the metal carrier. The at least one protrusion of the plurality of protrusions is engaged with the nose in the assembled state of the double-loop metal strain relief and shield clamp. The nose may be arranged at the metal carrier of the double-loop metal strain relief and shield clamp.

According to an embodiment, the locking part comprises a flexible arm at the metal carrier. The at least one protrusion of the plurality of protrusions is engaged with the flexible arm in the assembled state. The flexible arm may be attached to the metal carrier at one end of the metal carrier. The other end of the flexible arm may not be attached to the metal carrier. Thus, the other end of the flexible arm may be moveable at least in one direction. As a result, the flexible arm may act like a spring that can be pressed down. If the flexible arm is pressed down, the rewinder, in particular at least one protrusion of the plurality of protrusions arranged at the outer surface of the rewinder may be disengaged with the locking part. The rewinder may be arranged freely rotatable in the at least one support of the metal carrier and can be "unwound" a little or unwind itself. It is understood that the flexible arm may be a part of the metal carrier.

The flexible arm may include a nose or a salient, wherein the at least one protrusion of the plurality of protrusions is engaged with the nose or the salient of the flexible arm in the assembled state of the double-loop metal strain relief and shield clamp.

According to an embodiment, the locking part comprises a leaf spring having a recess. The at least one protrusion of the plurality of protrusions is located inside the recess and engaged with an edge of the recess in the assembled state. The leaf spring may be attached to the metal carrier at one end of the metal carrier. The other end of the leaf spring may not be attached to the metal carrier. Thus, the other end of the leaf spring may be moveable at least in one direction. As a result, the leaf spring may be pressed down. If the leaf spring is pressed down, the rewinder, in particular by at least one protrusion of the plurality of protrusions arranged at the outer surface of the rewinder may be disengaged with the locking part. The rewinder may be arranged freely rotatable in the at least one support of the metal carrier and can be "unwound" a little or unwind itself.

The recess may be configured to accommodate the protrusions arranged at the outer surface of the rewinder. In particular, the recess may be configured such that each protrusion of the plurality of protrusions may enter the recess and leave the recess again while the metal strip is being wound onto the rewinder.

According to an embodiment, the locking part comprises a worm screw, wherein the at least one protrusion of the plurality of protrusions is engaged with the worm screw. The plurality of protrusions may be designed as a gear wheel. The worm screw may be rotatably arranged at the metal carrier. The rewinder may be rotatable in the winding direction and in the unwinding direction by turning the worm screw. Thus, the metal strip may be wound onto and unwound from the rewinder by turning the worm screw in one direction or the other. Additionally, the rewinder may be locked by the worm screw if the worm screw is not rotated. The locking part with the worm screw may provide a stepless and self-locking mechanism of the double-loop strain relief and shield clamp.

According to an embodiment, the double-loop metal strain relief and shield clamp further comprises a mounting part arranged at the metal carrier and configured to fix the double-loop metal strain relief and shield clamp to an electric device. The mounting part may be configured to be clipped to the electric device. In particular, the mounting part may be configured to be hooked in and snapped into a fixture attached to the electric device or attached to a frame of the electric device.

Alternatively, the mounting part may be configured to be screwed to the electric device. In particular, the double-loop metal strain relief and shield clamp may be fixed to the electric device using a screw to screw the mounting part to a fixture or any other kind of support attached to the electric device or to a frame of the electric device. Mechanical strain relief may therefore be more robust and a connection between the double-loop metal strain relief and shield clamp and the electric device may also be more stable over time using a screwable mounting part. A secure, gas-tight and corrosion-protected connection between the double-loop metal strain relief and shield clamp and the electric device may be provided in the long term by a high contact pressure of the screw.

According to another aspect, the present disclosure is directed at a method for securing and shielding a cable using a double-loop metal strain relief and shield clamp. The method comprises: wrapping the metal strip around a shielding braid of a cable to form a first loop; wrapping the metal strip around the first loop and the metal carrier to form a second loop; winding the metal strip using the rewinder to shield the cable with the first loop of the metal strip and secure the cable to the metal carrier with the second loop of the metal strip, wherein the first loop of the metal strip encompasses the cable and the second loop of the metal strip encompasses the cable and a securing part of the metal carrier. It is understood that the rewinder may be arranged in a support at the metal carrier before winding the metal strip using the rewinder.

Alternatively, the double-loop metal strain relief and shield clamp may be pre-assembled, i.e. the first loop and the second loop of the metal strip may already be formed in that the first loop is arranged completely in the second loop of the metal strip.

According to another aspect, a method for securing and shielding a cable using a pre-assembled double-loop metal strain relief and shield clamp may include: pushing a cable through a preformed first loop and a preformed second loop of a metal strip; winding the metal strip using a rewinder of the pre-assembled double-loop metal strain relief and shield clamp to shield the cable with the first loop of the metal strip and secure the cable to a metal carrier of the pre-assembled double-loop metal strain relief and shield clamp with the second loop of the metal strip, wherein the first loop of the metal strip encompasses the cable and the second loop of the metal strip encompasses the cable and a securing part of the metal carrier.

According to another aspect, the present disclosure is directed at an electric device comprising a fixture configured to receive a double-loop metal strain relief and shield clamp as described herein. The electric device may be a servo drive, a servo amplifier, a frequency inverter or any other kind of electric device. The electric device may be installed inside or outside a control cabinet. It is understood that the electric device may be any type of electric device connected to a cable, which have to be securely attached to the electrical device and shielded against electromagnetic interference.

The fixture may be a heat sink or part of a heat sink attached to the electric device. The fixture may be part of a housing or part of a frame of the electric device. The fixture may be made of an electrically conductive material, for example aluminum die casting, and may be grounded. It is understood that the fixture may also be a mounting sheet. The fixture may be configured to divert high-frequency leakage current from the cable, in particular from a motor cable.

### DRAWINGS

Exemplary embodiments and functions of the present disclosure are described herein in conjunction with the following drawings showing:
- Fig. 1: a schematic perspective view of a double-loop metal strain relief and shield clamp according to an embodiment;
- Fig. 2: a schematic front view of a metal strip according to an embodiment;
- Fig. 3: a section of a schematic front view of the double-loop metal strain relief and shield clamp of Fig. 1;
- Fig. 4: a schematic perspective view of a double-loop metal strain relief and shield clamp including a locking part with a nose according to an embodiment;
- Fig. 5: a schematic perspective view of a double-loop metal strain relief and shield clamp including a locking part with a flexible arm according to an embodiment;
- Fig. 6: a schematic perspective view of a double-loop metal strain relief and shield clamp including a locking part with a leaf spring according to an embodiment;
- Fig. 7: a schematic perspective view of a double-loop metal strain relief and shield clamp including a locking part with a worm screw according to an embodiment;
- Fig. 8: a schematic perspective view of a double-loop metal strain relief and shield clamp including a mounting part according to an embodiment; and
- Fig. 9: a flow diagram illustrating a method for securing and shielding a cable to an electric device using a double-loop metal strain relief and shield clamp according to an embodiment.

### DETAILED DESCRIPTION

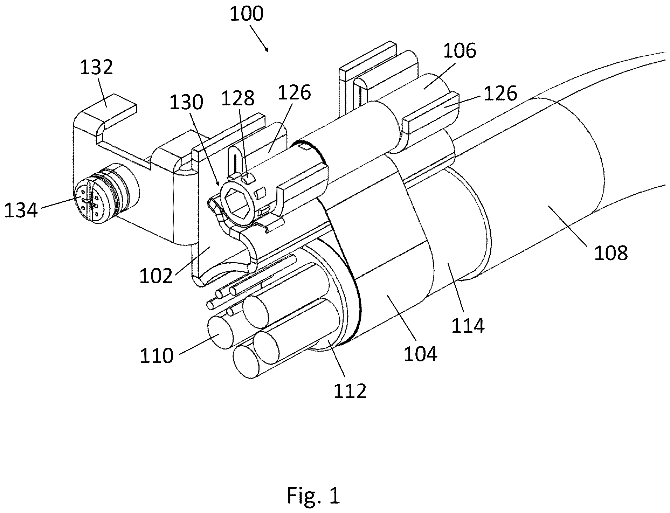

Fig. 1 shows a schematic perspective view of a double-loop metal strain relief and shield clamp 100 according to an embodiment. The double-loop metal strain relief and shield clamp 100 includes a metal carrier 102, a metal strip 104 and a rewinder 106. The double-loop metal strain relief and shield clamp 100 is configured to secure a cable 108 at the metal carrier 102 and shield the cable 108 against electromagnetic radiation.

The cable 108 may include a plurality of isolated strands 110 embedded in an inner filler material 112 of the cable 108. The cable 108 may be a typical motor cable with different jacket layers including a shielding braid 114. The strands 110 or electric conductors of the cable 108 may end in a plug (not shown in the figures) that is connected to an electric device.

The rewinder 106 is configured to wind the metal strip 104 and secure the cable 108 to the metal carrier 102. The rewinder 106 may be cylindrically formed as a roll (in other words: a pulley) which is rotatably arranged in two supports 126 of the metal carrier 102. Furthermore, the rewinder 106 may be removably arranged in the metal carrier 102, in particular removably arranged in the supports 126 of the metal carrier 102. A first end of the metal strip 104 is attached to the metal carrier 102 and a second end of the metal strip 104 is attached to the rewinder 106. Thus, the rewinder 106 can be removed from the metal carrier 102 together with the metal strip 104.

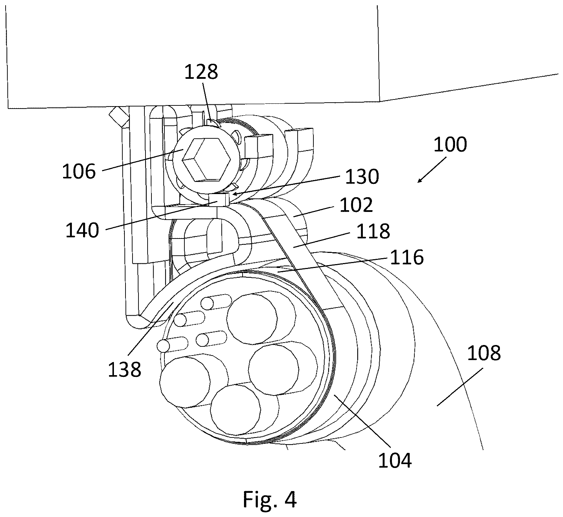

The double-loop metal strain relief and shield clamp 100 may include a locking part 130 configured to secure the rewinder 106 in the assembled state of the double-loop metal strain relief and shield clamp 100. Various embodiments of the locking part 130 will be described in more detail in Figs. 4 to 6 further below.

The rewinder 106 of the double-loop metal strain relief and shield clamp 100 includes a plurality of protrusions 128 arranged on an outer surface of the rewinder 106. The plurality of protrusions 128 may be evenly distributed on the surface of the rewinder 106, thus, equal distances may be between two protrusions 128.

Each protrusion 128 of the plurality of protrusions 128 may be formed as a ramp. At least one protrusion128 of the plurality of protrusions 128 may be engaged with the locking part 130 in the assembled state of the double-loop metal strain relief and shield clamp 100 to secure the rewinder 106 in the assembled state of the double-loop metal strain relief and shield clamp 100.

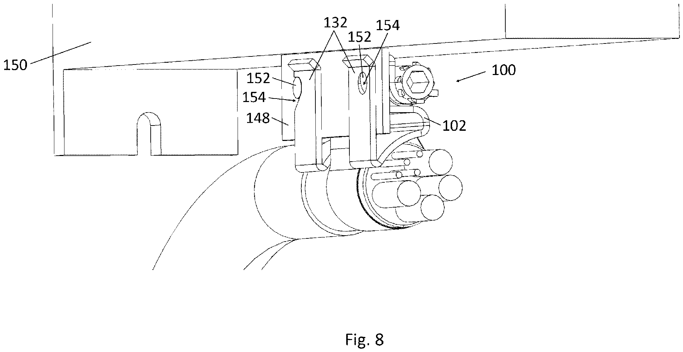

A mounting part 132 may be arranged at the metal carrier 102. The mounting part 132 may be configured to fix the double-loop metal strain relief and shield clamp 100 to an electric device 150, in particular to a fixture 148 of the electric device 150 (see Fig. 8). The metal strip 104 may be in contact to the fixture 148 in the assembled state of the double-loop metal strain relief and shield clamp 100. Therefore, high-frequency leakage current may be directly diverted from the cable 108.

The mounting part 132 of this embodiment may include a screw 134. The screw 134 may be used to achieve a high pressing force and thus, create a long-term, secure, gas-tight and corrosion-protected connection between the double-loop metal strain relief and shield clamp 100 and the electric device 150.

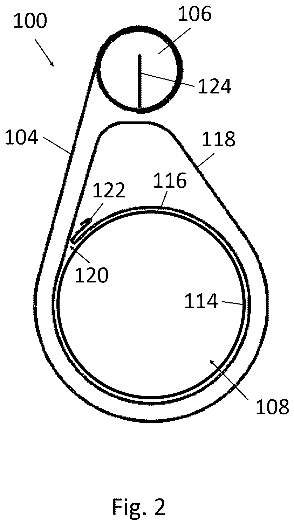

Fig. 2 shows a schematic sectional view of the metal strip 104 and the rewinder 106 according to an embodiment. The metal carrier 102 is not shown in Fig. 2. The metal strip 104 is configured to form a first loop 116 and a second loop 118. The first loop 116 is configured to substantially encompass the cable 108, in particular the shielding braid 114 of the cable 108, at an angle of 360 degrees. The first loop 116 of the metal strip 104 is in contact with almost the entire peripheral surface of the shielding braid 114 across the width of the metal strip 104 in the assembled state of the double-loop metal strain relief and shield clamp 100. In the area where a first end 122 of the first loop 116 is attached to the metal carrier 102 and the first loop 116 merges into the second loop 118 of the metal strip 104, there may only be a small gap 120 between the first loop 116 and the shielding braid 114. A second end 124 of the metal strip 104 may be attached to the rewinder 106.

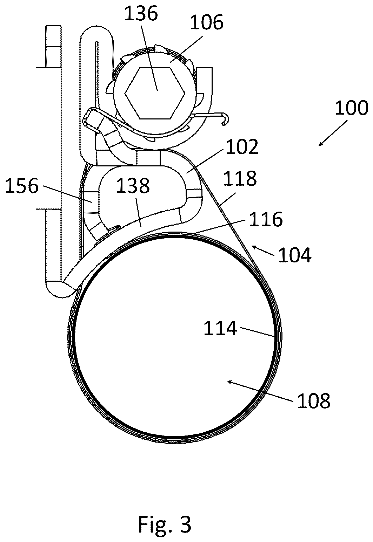

Fig. 3 shows a section of a schematic front view of the double-loop metal strain relief and shield clamp 100 of Fig. 1. As shown in Fig. 3, the first loop 116 of the metal strip 104 encompasses the cable 108, in particular the shielding braid 114 of the cable 108, and the second loop 118 of the metal strip 104 encompasses the cable 108 and a securing part 156 of the metal carrier 102. The rewinder 106 may include an opening 136 at a front end of the rewinder 106. The opening 136 may be hexagonal in shape and configured to receive a hexagon socket screw key. The rewinder 106 may be rotated using the hexagon socket screw key. It is understood that the rewinder 106 may have differently shaped suitable types of an opening 136, such as square opening, a slot, a cross slot, a hexagon socket or a rotary knob. Also, other types of tools may be used to rotate the rewinder 106, for example a crosshead screwdriver, a slotted screwdriver, a socket wrench or the like.

The metal strip 104 may be rolled onto the rewinder 106 by rotating the rewinder 106. During the rotation, the first loop 116 of the metal strip 104 may initially be contracted around the cable 108. Therefore, an earthing of the cable 108 may be achieved by tightening the first loop 116 around the metal shielding braid 114 of the cable 108 and contacting the first loop 116 to the shield plate 138 of the metal carrier 102. This may provide a good shielding of the cable 108, however, the cable 108 itself may not yet be firmly secured to the metal carrier 102. Therefore, the cable 108 may be pressed to a radius of the conductive shield plate 138 of the metal carrier 102 by means of the second loop 118. In particular, the rewinder 106 may be configured to press the cable 108, and therefore the shielding braid 114 of the cable 108, to the radius of the conductive shield plate 138 of the metal carrier 102 by tightening the second loop 118 of the metal strip 104. The second loop 118 may press the cable 108 against the conductive shield plate 138 of the metal carrier 102 and secure the cable to the metal carrier 102.

The second loop 118 may be pulled together by further rotating the rewinder 106. The cable 108 may be secured to the metal carrier 102 by the second loop 118 of the metal strip 104. In particular, the rewinder 106 may be configured to secure the cable 108 to the metal carrier 102 by tightening the second loop 118 of the metal strip 104. Therefore, a strain relief of the cable 108 may be achieved by securing the cable 108 through the second loop 118 of the metal strip 104 to the metal carrier 102. The second loop 118 of the metal strip 104 may not squeeze the cable 108 due to the circular surface (cylinder) of the cable, even with excessive tension of the metal strip 104.

Figs. 4 to 6 show several embodiments of the locking part 130 in more detail. Fig. 4 shows a schematic perspective view of a double-loop metal strain relief and shield clamp 100 with a locking part 130 including a nose 140. The nose 140 may be arranged at the metal carrier 102. At least one protrusion 128 of the plurality of protrusions 128 on the outer surface of the rewinder 106 may be engaged with the nose 140 in the assembled state of the double-loop metal strain relief and shield clamp 100. The at least one protrusion 128 may slide over the nose 140 during rotation of the rewinder 106 until the double-loop metal strain relief and shield clamp 100 is in the assembled state, i.e. the first loop 116 of the metal strip 104 and the second loop 118 of the metal strip 104 are pulled together such that the cable 108 is pressed against the radius of the conductive shield plate 138 of the metal carrier 102 and secured to the metal carrier 102.

When the first loop 116 and the second loop 118 are tightened, the rewinder 106 may no longer be rotated any further, and the protrusion 128 that was last pushed over the nose 140 may be blocked by the nose 140 and the rewinder 106 is prevented from turning back. Thus, the rewinder 106 is secured by the locking part 130 in the assembled state of the double-loop metal strain relief and shield clamp 100.

The cable 108 may be released from the double-loop metal strain relief and shield clamp 100 by lifting the rewinder 106, for example using a tool in the opening 138, in that the at least one protrusion 128 of the plurality of protrusions 128 that is engaged with the nose 140 may be lifted over the nose 140. As a result, the at least one protrusion 128 of the plurality of protrusions 128 is not engaged with the nose 140 anymore, and the metal strip 104 may be unwound from the rewinder 106 to release the cable 108 from the double-loop metal strain relief and shield clamp 100.

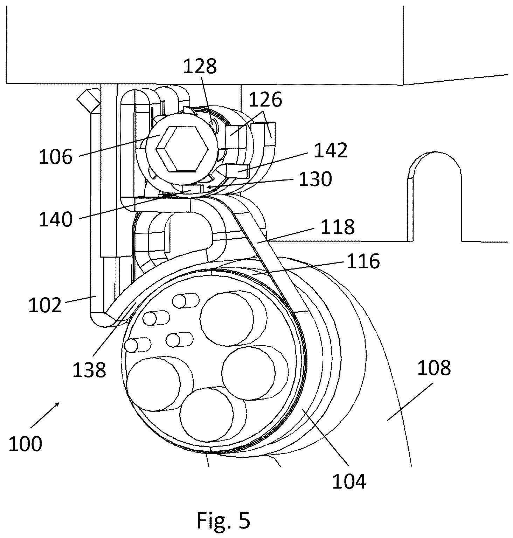

Fig. 5 shows a schematic perspective view of a double-loop metal strain relief and shield clamp 100 including a locking part 130 with a flexible arm 142 according to an embodiment. The flexible arm 142 may be attached at the metal carrier 102 at one end and be free or not attached to the metal carrier 102 at another end. The flexible arm 142 may therefore be movable in one direction. The flexible arm 142 may be configured as an additional support to the rewinder 106. Thus, the rewinder 106 may be rotatably arranged in the two supports 126 and the flexible arm 142 in this embodiment. The locking part 130 may also include a nose 140 attached at the flexible arm 142.

At least one protrusion 128 of the plurality of protrusions 128 on the outer surface of the rewinder 106 may be engaged with the flexible arm 142, in particular with the nose 140 attached to the flexible arm 142 in the assembled state of the double-loop metal strain relief and shield clamp 100. The at least one protrusion 128 may slide over the nose 140 during rotation of the rewinder 106 until the double-loop metal strain relief and shield clamp 100 is in the assembled state, i.e. the first loop 116 of the metal strip 104 and the second loop 118 of the metal strip 104 are pulled together such that the cable 108 is pressed against the radius of the conductive shield plate 138 of the metal carrier 102 and secured to the metal carrier 102. The at least one protrusion 128 may push the flexible arm 142 downward as the at least one protrusion 128 slides over the nose 140. After the at least one protrusion 128 has been slid over the nose 140 completely, the nose 140 and thus the flexible arm 142 may spring back to an initial position. A handling of the double-loop metal strain relief and shield clamp 100 may therefore be more convenient compared to the embodiment of Fig. 4, since the rewinder 106 remains completely arranged in the supports 126 during rotation.

When the first loop 116 and the second loop 118 are tightened, the rewinder 106 may no longer be rotated any further, and the protrusion 128 that was last pushed over the nose 140 of the flexible arm 142 may be blocked by the nose 140 and the rewinder 106 is prevented from turning back. Thus, the rewinder 106 is secured by the locking part 130 in the assembled state of the double-loop metal strain relief and shield clamp 100.

The cable 108 may be released from the double-loop metal strain relief and shield clamp 100 by pulling the flexible arm 142 downwards at the end of the flexible arm 142 that is not attached to the metal carrier 102. As a result, the at least one protrusion 128 of the plurality of protrusions 128 is not engaged with the nose 140 of the flexible arm 142 anymore, and the metal strip 104 may be unwound from the rewinder 106 to release the cable 108 from the double-loop metal strain relief and shield clamp 100.

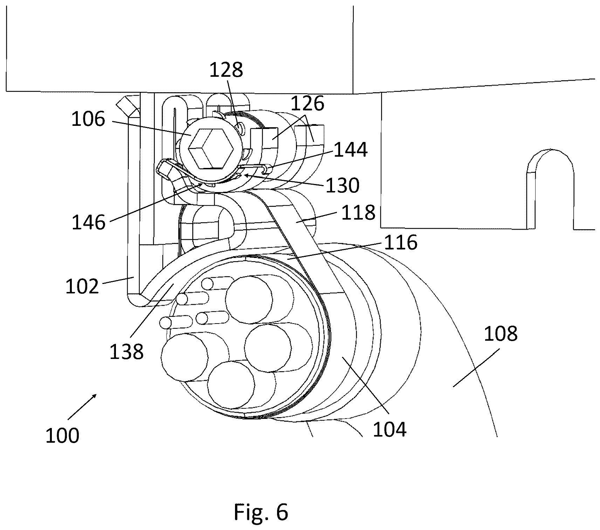

Fig. 6 shows a schematic perspective view of a double-loop metal strain relief and shield clamp 100 including a locking part 130 with a leaf spring 144 according to an embodiment. The leaf spring 144 may be attached at the metal carrier 102 at one end and be free or not attached to the metal carrier 102 at another end. The leaf spring 144 may therefore be movable in one direction. The leaf spring 144 may be curved and having a radius corresponding to a curvature of the outer surface of the rewinder 106. Therefore, the leaf spring 144 may be configured as an additional support to the rewinder 106. Thus, the rewinder 106 may be rotatably arranged in the two supports 126 and the leaf spring 144 in this embodiment. The leaf spring 144 may further include a recess 146 configured to receive the at least one protrusion 128 arranged on the outer surface of the rewinder 106.

At least one protrusion 128 of the plurality of protrusions 128 on the outer surface of the rewinder 106 may be engaged with the leaf spring 144, in particular with an edge of the recess 146 in the assembled state of the double-loop metal strain relief and shield clamp 100. The at least one protrusion 128 may slide over the leaf spring 144 during rotation of the rewinder 106 until the double-loop metal strain relief and shield clamp 100 is in the assembled state, i.e. the first loop 116 of the metal strip 104 and the second loop 118 of the metal strip 104 are pulled together such that the cable 108 is pressed against the radius of the conductive shield plate 138 of the metal carrier 102 and secured to the metal carrier 102. The at least one protrusion 128 may push the leaf spring 144 downward as the at least one protrusion 128 slides over the leaf spring 144. After the at least one protrusion 128 has been slid over an edge of the recess 146 of the leaf spring 144, the at least one protrusion 128 plunges into the recess 146 of the leaf spring 144 and thus the leaf spring 144 may spring back to an initial position. A handling of the double-loop metal strain relief and shield clamp 100 may therefore be more convenient compared to the embodiments of Figs. 4 and 5, since the rewinder 106 remains completely arranged in the supports 126 during rotation and a force with which the leaf spring 144 is pressed downward by the at least one protrusion 128 during rotation of the rewinder 106 may be less than in the embodiment of Fig. 5 due to the more flexible leaf spring 144 compared to the flexible arm 142.

When the first loop 116 and the second loop 118 are tightened, the rewinder 106 may no longer be rotated any further, and the protrusion 128 that was last pushed over the leaf spring 144 into the recess 146 of the leaf spring 144 may be blocked by an edge of the recess 146 and the rewinder 106 is prevented from turning back.

Thus, the rewinder 106 is secured by the locking part 130 in the assembled state of the double-loop metal strain relief and shield clamp 100.

The cable 108 may be released from the double-loop metal strain relief and shield clamp 100 by pulling the leaf spring 144 downwards at the end of the leaf spring 144 that is not attached to the metal carrier 102. As a result, the at least one protrusion 128 of the plurality of protrusions 128 is not engaged with leaf spring 144 anymore, and the metal strip 104 may be unwound from the rewinder 106 to release the cable 108 from the double-loop metal strain relief and shield clamp 100.

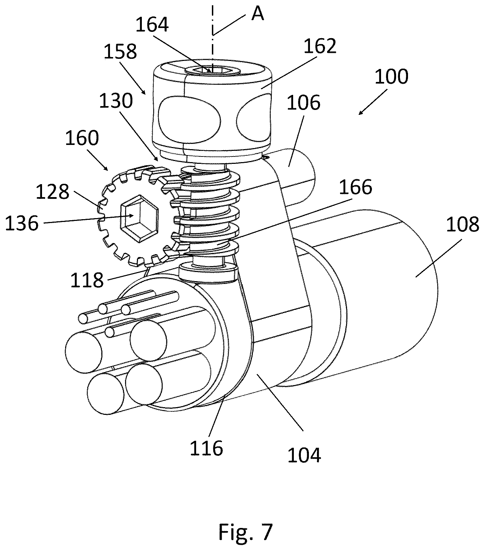

Fig. 7 shows a schematic perspective view of a double-loop metal strain relief and shield clamp 100 including a locking part 130 with a worm screw 158 according to an embodiment. The worm screw 158 may be rotatably arranged at the metal carrier 102 (not shown in Fig. 7) around a rotation axis A of the worm screw 158. The rewinder 106 and the worm screw 158 may be arrange perpendicular to each other and in a distance from each other.

A rotary knob 162 may be arranged at one end of the worm screw 158, wherein the worm screw 158 may be rotatable by turning the rotatory knob 162 in one or the other direction. The rotary knob 162 may include an opening 164. The opening 164 of the rotary knob 162 may be shaped and configured corresponding to the opening 136 at the front end of the rewinder 106. Thus, the worm screw 158 may be rotated with the rotary knob 162, for example by hand, or through the opening 164 of the rotary knob 162 with a tool.

The plurality of protrusions 128 may form a gear wheel 160 on the outer surface of the rewinder 106. At least one protrusion 128 of the plurality of protrusions 128 on the outer surface of the rewinder 106 may be engaged with the worm screw 158, in particular with a toothing 166 of the worm screw 158 as shown in Fig. 7.

The metal strip 104 may be wound onto and unwound from the rewinder 106 by turning the worm screw 158 in one direction or the other. The rewinder 106 may be locked by the worm screw 158 if the worm screw 158 is not rotated. In particular the at least one protrusion 128 of the gear wheel 160 may be locked by the toothing 166 of the worm screw 158. Thus, when the first loop 116 and the second loop 118 of the metal strip 104 are tightened, the rewinder 106 may no longer be rotated any further and the rewinder 106 is prevented from turning back.

The cable 108 may be released from the double-loop metal strain relief and shield clamp 100 by turning the worm screw 158 in the unwinding direction. As a result, the rewinder 106 may turn in the unwinding direction and the metal strip 104 may be unwound from the rewinder 106 to release the cable 108 from the double-loop metal strain relief and shield clamp 100.

Fig. 8 shows a schematic perspective view of a double-loop metal strain relief and shield clamp 100 including a mounting part 132 according to an embodiment. The mounting part 132 may be attached to the metal carrier 102 or be a part of the metal carrier 102. The mounting part 132 may be configured to fix the double-loop metal strain relief and shield clamp 100 to an electric device 150, in particular to a fixture 148 of the electric device 150. The fixture 148 of the electric device 150 may be arranged at a bottom of the electric device 150. In the embodiment shown in Fig. 8, the fixture 148 may include two raisings 152 and the mounting part 132 may include two respective cavities 154. The cavities 154 may be arranged at a respective arm of the mounting part 132 and configured to receive the respective raising 152 when the double-loop metal strain relief and shield clamp 100 is attached to the fixture 148. The double-loop metal strain relief and shield clamp 100 may be attached to the electric device 150 by hooking one arm of the mounting part 132 to the fixture 148, in particular to one of the two raisings 152, and pushing the other arm of the mounting part 132 upwardly until the other arm engages the other of the two raisings 152, i.e. the other raising 152 is received completely by the cavity 154 of the other arm. Thus, the metal carrier 102 of the double-loop metal strain relief and shield clamp 100 is clipped to the fixture 148 of the electric device 150.

It is understood that the double-loop metal strain relief and shield clamp 100 may be attached to the electric device 150 using a mounting part 132 including a screw 134 as shown and describe in Fig. 1. In this embodiment, the metal carrier 102 of the double-loop metal strain relief and shield clamp 100 is plugged onto the fixture 148 of the electric device 150 and the double-loop metal strain relief and shield clamp 100 is fixed to the electric device 150 by screwing the mounting part 132 to the electric device 150 by means of the screw 134.

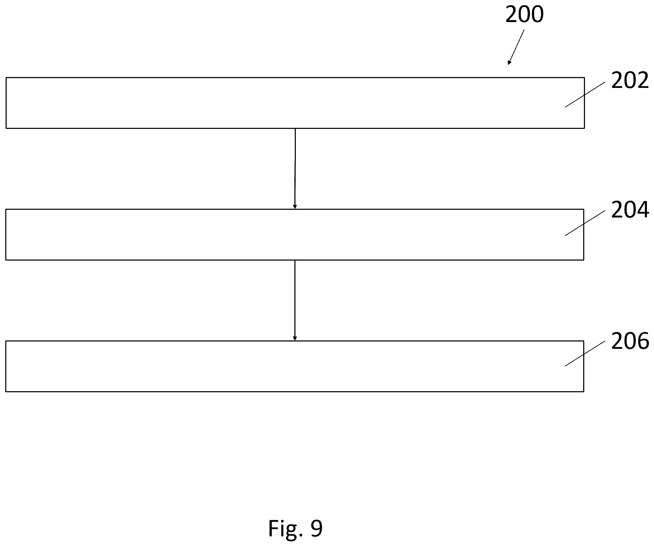

Fig. 9 shows a flow diagram illustrating a method 200 for securing and shielding a cable to an electric device using a double-loop metal strain relief and shield clamp according to an embodiment. At 202, a metal strip of the double-loop metal strain relief and shield clamp may be wrapped around a shielding braid of a cable to from a first loop. At 204, the metal strip may be wrapped around the first loop and a metal carrier of the double-loop metal strain relief and shield clamp to form a second loop. At 206, the metal strip may be winded using a rewinder of the double-loop metal strain relief and shield clamp to shield the cable with the first loop of the metal strip and secure the cable to the metal carrier with the second loop of the metal strip.

It is to be understood that the terms "first" and "second", or "one" and "another" are only for distinguishing different elements and are not limiting the respective feature.

In summary, a double-loop metal strain relief and shield clamp including a double looping of a cable and a braided shield of the cable with a metal strip. The double looping of the cable with the metal strip acts like a hoist pulley system when it is coiled up, creating high forces for strain relief without flattening the cable. As a result, a combination of two functions is achieved in one step: 360° shield contacting on the one hand and strain relief by pressing the cable against a conductive shield plate on the other.

### Reference numeral list

- 100: double-loop metal strain relief and shield clamp
- 102: metal carrier
- 104: metal strip
- 106: rewinder
- 108: cable
- 110: strand
- 112: inner filler material
- 114: shielding braid
- 116: first loop
- 118: second loop
- 120: gap
- 122: first end of the metal strip
- 124: second end of the metal strip
- 126: support
- 128: protrusion
- 130: locking part
- 132: mounting part
- 134: screw
- 136: opening
- 138: conductive shield plate
- 140: nose
- 142: arm
- 144: leaf spring
- 146: recess
- 148: fixture
- 150: electric device
- 152: raising
- 154: cavity
- 156: securing part
- 158: worm screw
- 160: gear wheel
- 162: rotatory knob
- 164: opening
- 166: toothing

- 200: method for securing and shielding a cable to an electric device
- 202: step of wrapping a metal strip around a shielding braid of a cable
- 204: step of wrapping the metal strip around a first loop of the metal strip and a metal carrier
- 206: winding up the metal strip

- A: rotation axis

## Claims

1. Double-loop strain relief and shield clamp (100) for securing and shielding a cable (108) to an electric device (150), comprising:
a carrier (102);
a strip, in particular a metal strip (104), configured to form a first loop (116) and a second loop (118); and
a rewinder (106) configured to wind the strip (104) to shield the cable (108) with the first loop (116) of the strip (104) and secure the cable (108) to the carrier (102) with the second loop (118) of the strip (104),
wherein the first loop (116) of the strip (104) encompasses the cable (108) and the second loop (118) of the strip (104) encompasses the cable (108) and a securing part (156) of the carrier (102).

2. The double-loop strain relief and shield clamp (100) of claim 1,
wherein a first end of the strip (104) is attached to the carrier (102) and a second end of the strip (104) is attached to the rewinder (106).

3. The double-loop strain relief and shield clamp (100) according to at least one of claims 1 or 2,
wherein the first loop (116) is configured to substantially encompass the cable (108) at an angle of 360 degrees.

4. The double-loop strain relief and shield clamp (100) according to at least one of claims 1 to 3,
wherein the first loop (116) of the strip (104) is arranged completely in the second loop (118) of the strip (104).

5. The double-loop strain relief and shield clamp (100) according to at least one of claims 1 to 4,
wherein the second loop (118) extends along at least two surfaces of the securing part (156).

6. The double-loop strain relief and shield clamp (100) according to at least one of claims 2 to 5,
wherein the strip (104) extends from the first end (122) of the strip (104) around a shielding braid (114) of the cable (108), around the securing part (156) of the carrier (102) and back around the shielding braid (114) of the cable (108) to the rewinder (106) at the second end (124) of the strip (104).

7. The double-loop strain relief and shield clamp (100) according to at least one of claims 1 to 6,
wherein the carrier (102) comprises a conductive shield plate (138) and the rewinder (106) is configured to press the cable (108) to a radius of the conductive shield plate (138) of the carrier (102) using the second loop (116) of the strip (104).

8. The double-loop strain relief and shield clamp (100) according to at least one of claims 1 to 7,
wherein the carrier (102) comprises at least one support (126), in particular two supports (126) configured to receive the rewinder (106),
wherein the at least one support (126) is formed as a half-shell.

9. The double-loop strain relief and shield clamp (100) according to at least one of claims 1 to 8,
wherein the securing part (156) of the carrier (102) comprises at least one radius, in particular a plurality of radii configured to deflect a course of the strip (104).

10. The double-loop strain relief and shield clamp (100) according to at least one of claims 1 to 9,
wherein the rewinder (106) is removably arranged in the carrier (102).

11. The double-loop strain relief and shield clamp (100) according to at least one of claims 1 to 10, further comprising:
a locking part (130) configured to secure the rewinder (106) in an assembled state of the double-loop strain relief and shield clamp (100).

12. The double-loop strain relief and shield clamp (100) according to claim 11, wherein the rewinder (106) comprises a plurality of protrusions (128) arranged on an outer surface of the rewinder (106), and
wherein at least one protrusion (128) of the plurality of protrusions (128) is engaged with the locking part (130) in an assembled state of the double-loop strain relief and shield clamp (100).

13. The double-loop strain relief and shield clamp (100) according to at least one of claims 1 to 12, further comprising:
a mounting part (132) arranged at the carrier (102) and configured to fix the double-loop strain relief and shield clamp (100) to an electric device (150).

14. A method (200) for securing and shielding a cable (108) to an electric device (150) using a double-loop strain relief and shield clamp (100) according to any one of claims 1 to 13, comprising:
wrapping (202) the strip (104) around a shielding braid (114) of a cable (108) to form a first loop (116);
wrapping (204) the strip (104) around the first loop (116) and the carrier (102) to form a second loop (118);
winding (206) the strip (104) using the rewinder (106) to shield the cable (108) with the first loop (116) of the strip (104) and secure the cable (108) to the carrier (102) with the second loop (118) of the strip (104), wherein the first loop (116) of the strip (104) encompasses the cable (108) and the second loop (118) of the strip (104) encompasses the cable (108) and a securing part (156) of the carrier (102).

15. An electric device (150) comprising a fixture (148) configured to receive a double-loop strain relief and shield clamp (100) in accordance with at least one of claims 1 to 13.
